# EUROPEAN PATENT APPLICATION

(11) **EP 0 862 864 A2**
(43) Date of publication of application: **09.09.1998**
(21) Application number: 98200665.2
(22) Date of filing: 04.03.1998
(51) Int. Cl.: A23L 1/236, A23L 1/308

(54) **Sweetener and food preparations containing said sweetener**

(30) Priority: 05.03.1997 NL 1005438
(71) Applicant: K.U. Leuven Research & Development, 3000 Leuven (BE); Brouwers, Louis Jean Hilda, 2500 Lier (BE)
(72) Inventor: Geuns, Johannes Cornelius Martinus, 3001 Heverlee (BE); Brouwers, Louis Jean Hilda, 2500 Lier (BE)
(74) Representative: Eveleens Maarse, Pieter

(57) **Abstract**

The invention relates to a composition comprising at least one glycoside of steviol and at least one fructan, selected from the group comprising the inulins, the levans and the neo-kestoses.

The invention further relates to a food preparation comprising a composition according to the invention. Such a composition has improved properties over those of the separate ingredients, especially in relation with the physical volume enhancing effect by matrix formation. The composition according to the invention further provides a useful application for the fructans, in particular for the inulins, which are in some countries abundantly available, but only being used for a small part.

## Description

The invention relates to a composition according to claim 1.

Such a composition has improved properties over those of the separate ingredients, especially in relation with the physical volume enhancing effect by matrix formation. The composition according to the invention further provides a useful application for the fructans, in particular for the inulins, which are in some countries abundantly available, but only being used for a small part.

The composition according to the invention provides a sweetener with superior nutritional values, in particular regarding calories, taste and sweetness, said sweetener is additionally easier in use for food preparations because an appropiate volume/sweetness intensity ratio can easily be obtained. Such a preferable volume/sweetness intensity ratio is reached when the fructan concentration in a composition of the invention is preferably 80-99.9% by weight and more preferably 90-99.9% by weight.

The glycosides of steviol are preferably selected from the group comprising stevioside, steviolmonoside, steviolbioside, rebaudioside A, rebaudioside B, rebaudioside C, rebaudioside D, rebaudioside E, dulcoside A and dulcoside B or is directly derived from parts of a Stevia rebaudiana plant.

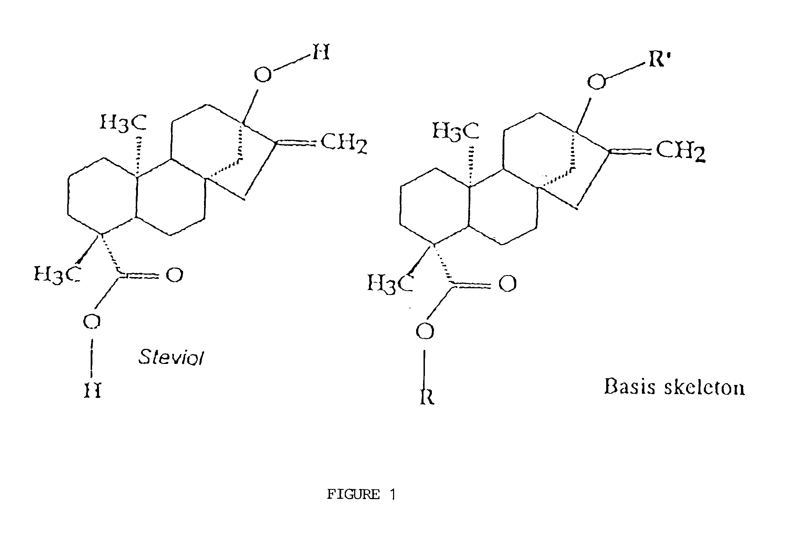

Stevioside is one of the glycosides of steviol that occurs in for example Stevia rebaudiana Bertoni together with 8 other compounds derived from steviol. Steviol is 13-Hydroxykaur-16-en-18-oic acid (Merck Index nr. 8765), stevioside is 13-[(2-O-β-D-Glucopyranosyl-α-D-glucopyranosyl)oxy]-kaur-16-en-180ic acid β-D-glucopyranosyl ester (Merck Index: 8766). The structure of steviol is given in figure 1. The structure of stevioside and the other similar sweeteners can be derived from the basis skeleton by substituting the R-groups by suitable sidegroups.

Sidegroups of the stevioglycosides (Glc=glucose, Rh=rhamnose) are shown in table 1.

**Table 1**

| Name | R | R' |
|---|---|---|
| Steviolmonoside | H | β-Glc |
| Steviolbioside | H | β-Glc-β-Glc(2-1) |
| Stevioside | β-Glc | β-Glc-β-Glc(2-1) |
| Rebaudioside A | β-Glc | β-Glc-β-Glc(2-1) └ β-Glc(3-1) |
| Rebaudioside B | H | β-Glc-β-Glc(2-1) └ β-Glc(3-1) |
| Rebaudioside C | β-Glc | β-Glc-β-Rh(2-1) └ β-Glc(3-1) |
| Rebaudioside D | β-Glc-β-Glc(2-1) | β-Glc-β-Glc(2-1) └ β-Glc(3-1) |
| Rebaudioside E | β-Glc-β-Glc(2-1) | β-Glc-β-Glc(2-1) |
| Dulcoside A | β-Glc | β-Glc-β-Rh(2-1) |
| Dulcoside B | β-Glc | β-Glc-β-Rh(2-1) └ β-Glc(3-1) |

Stevioside is 250 - 300 times sweeter than sucrose and has a very low caloric value.

These glycosides of steviol are due to their high sweetness intensity only useful in fluid or semi-fluid food preparation such as beverages, sauces or confectionery due to the necessary dilution of the glycoside of steviol in the food product.

Fructans are carbohydrates composed mainly of fructosyl-fructose (Fru) bonds (Lewis, 1993). Three isomeric trisaccharides that form the basis of three series of fructans with different binding patterns were isolated. A first trisaccharide, 1-kestose, is formed by a β(2→1) bond between Fructose (Fru) and the C1 primary hydroxyl of Fru present in Sucrose (Suc). This trisaccharide is also called isokestose (old name) or 1-kestotriose (new name).

If the bond is between Fru and the C6 primary hydroxyl function of Fru in Suc, then the molecule, characterized by a β(2→6) bond, is called 6-kestose. Its old name is kestose, now its preferential name being 6-kestotriose. In the last isomeric trisaccharide Fru is coupled to the C6 primary hydroxylgroup of Glucose (Glc) in Suc. The trisaccharide formed, neokestcse or 6G-kestotriose, does not contain a final Glc as was the case with 1-kestose and 6-kestose. Fructans are only metabolized by bacteria of the colon. Fructans are also known as a stimulating agent for pro-biotic bacteries for example Bifidus bacteries.

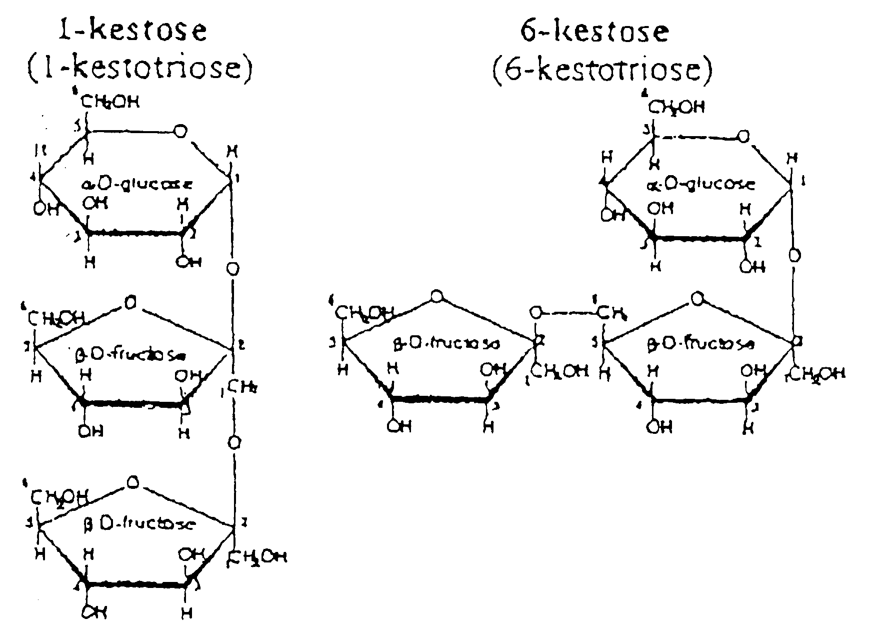

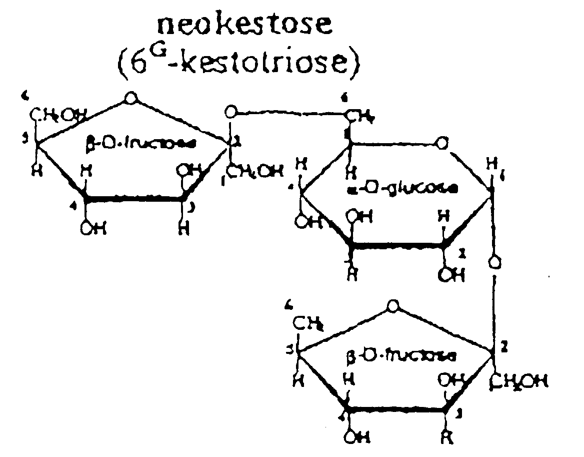

### Structure of the three fructan trisaccharides.

The simplest plant fructans are based on and derived from the trisaccharide isokestose. These fructans, composed of linear non-reducing chains with only β(2→1) bonds and one terminal Glc molecule, are called inulins.

Inulins are mainly found in the Asteraceae in which they are accumulated in the roots (cg. Cichorium intybus, Scorzonera hispanica, Taraxacum officinale) or in tubers (Helianthus tuberosus, Dahlia variabilis). Lewis (1993) renamed inulins as fructans with mainly or exclusively β(2→1) fructosyl-Fru bonds. Glc may be present, but this is not necessary. The same author also proposed the name inulo-n-oses for oligomeric fructofuransyl carbohydrates (Fn) that only contained Fru. These oligomers contain only β(2→1) bonds, i.e. inulobiose (F2), inulotriose (F3) etc.

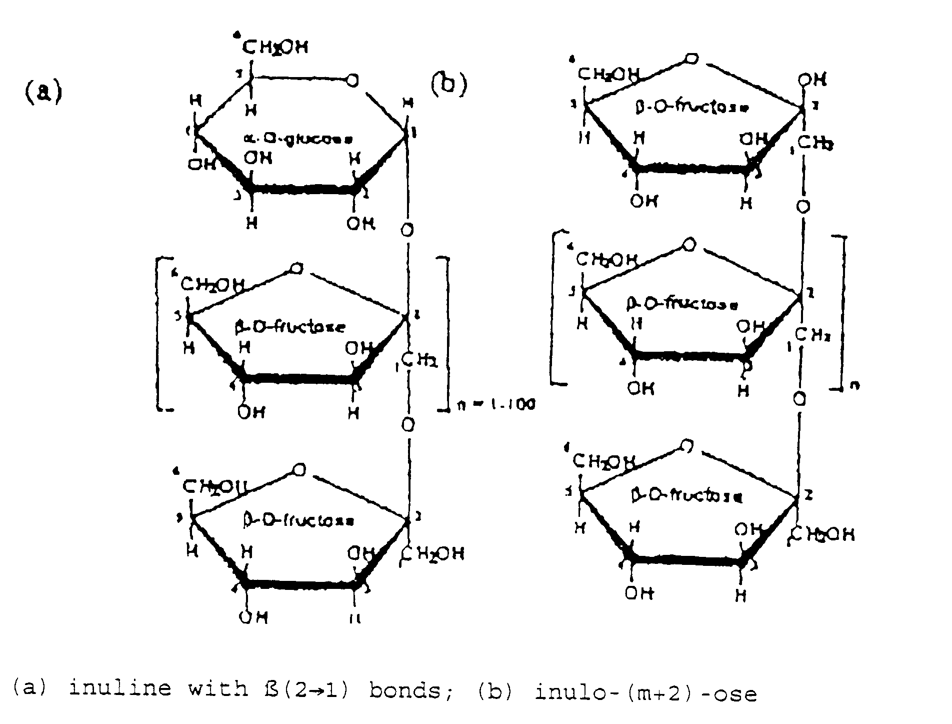

The trisaccharide 6-kestose is the basis of a second group of fructans, the levans, in which the Fru units are combined via β(2→6) bonds. Lewis (1993) redefined levans as fructans with mainly or exclusively β(2→6) bonds in which Glc may or may not be present. In analogy with inulo-n-oses, levan-n-oses were defined as fructofuranosyl carbohydrates containing only fructosyl units bound via β(2→6) bonds, i.e. levanbiose (F2), levantriose (F3) etc. These β(2→6) bonds mainly occur in fructans in grasses and bacteria. To avoid confusion with the larger bacterial β(2→6) fructans, the plant fructans of the β(2→6) type are called graminans (Lewis, 1993). These can also contain β(2→1) bonds besides their β(2→6) bonds.

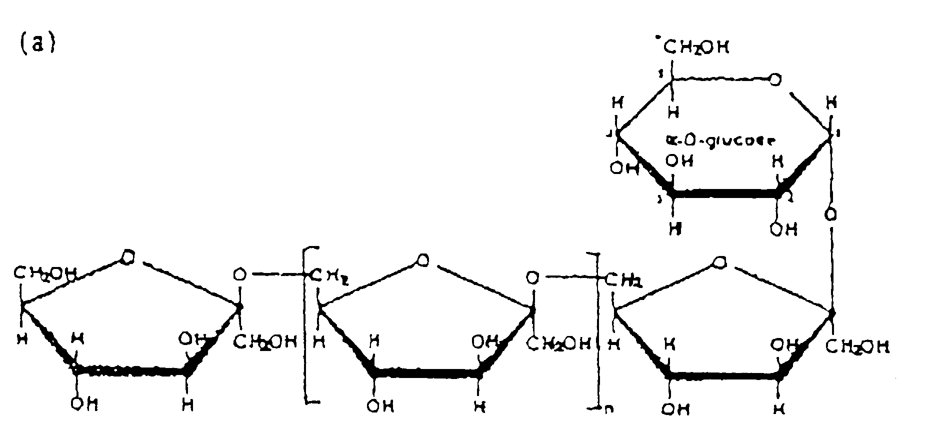

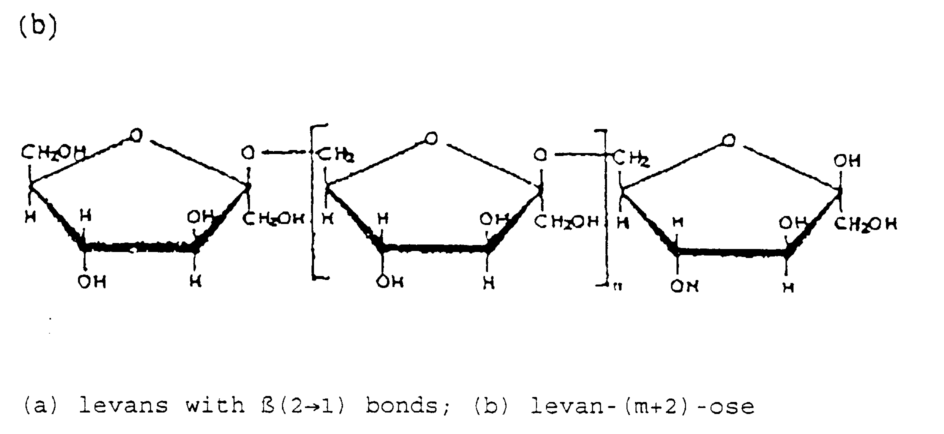

In neokestose two fructosyl residues are linked with one glycosyl residue. Chain elongation can take place at both sides, resulting in a non-reducing polymer. The bonds between the Fru molecules can be of tine β(2→1) type as well as of the β(2→6) type. Fructans, derived from neokestose, have been purified from Asparagus officinales and from Leucojum sp.

The combination of stevioside and derived compounds with fructans (with 1 or more of the 3 groups, under which inulin) and derived compounds is applicable in all ratios of mixture, as a powder and/or in solution, and under all circumstances and conditions. solution, and under all circumstances and conditions resulting in a greenish coloured mixture. The cultivation can be done in the field without the use of pesticides.

Fructans, in particular inuline is a soluble fiber with a very low energetic value ( 1.5 kCal/g) and has a very low sweetness intensity.

The harmless daily intake amount for an adult depends upon the degree of polymerisation (dp) and varies about 5 g (dp < 9) and about 20 g (dp between 9 and 60). If these daily amounts are exceeded flatulence and possibly even diarrhoea arises.

Due to these small daily amounts and to their low sweetening intensity fructans are not useful in everyday sweetened food products.

The composition according to the invention combines a low caloric, low sweetness intensity fructan with a glycoside of stevioside into a sweetener with superior characteristics and suitable for all kinds of sweetened everyday food products, and convenient for home kitchen food preparations.

For the glycosides of stevioside the fructan serves as an ideal volumemaker necessary for a lot of food preparations, for example jam, compote, jelly, marmelade, pies, etc.

Further the composition according to the invention has the following advantages: convenient ratio volume/sweetness intensity, low caloric value, high sweetness intensity, non-toxic and stable when being cooked or baked and harmless for diabetics.

The composition of the invention has also an improved bacteriological quality because the Bifidus-species is stimulated, with the consequence that the growth of pathogene bacterial species, such as Salmonella, Staphylococcus, E.coli is hindered. The composition has also an improved anti-caries effect in the mouth.

The invention and their advantages will be elucidated in the following compositions and food preparations.
Composition A: stevioside: inulin 95:5 (w/w); 1 g corresponds to 285 g sugar
Composition B: stevioside: inulin 80:20 (w/w) ; 1 g corresponds to 240 g sugar
Composition C: stevioside: inulin 50:50 (w/w) ; 1 g corresponds to 150 g sugar
Composition D: stevioside: inulin 10:90 (w/w) ; 1 g corresponds to 30 g sugar
Composition E: stevioside: inulin 2:98 (w/w) ; 1 g corresponds to 6 g sugar
Composition F: stevioside: neokestose 2:98 (w/w); 1 g corresponds to 6 g sugar
Composition G: ground Stevia: inulin 95:5 (w/w); 1 g corresponds to 18 g sugar
Composition H: ground Stevia: inulin 80:20 (w/w); 1 g corresponds to 15 g sugar
Composition I: ground Stevia: inulin 50:50 (w/w); 1 g corresponds to 9 g sugar
Composition J: ground Stevia leaves: neokestose 50:50 (w/w) ; 1 g corresponds to 9 g sugar.

The ingredients of these compositions were obtained as follows. Inulins with a degree of polymerisation above 9 sold as "Frutafit", and inulins with a chain length above 22 monomeric units ("Frutafit EXL") both are sold by SENSUS, The Netherlands.

Neokestose was extracted by cooking finely ground Asparagus officinalis roots in a double volume of water. This solution was filtered and stored in the refrigerator during several days, after which the neokestose crystallized.

Stevia rebaudiana Bertoni plants were grown in our own greenhouse. The ground leaves were obtained by drying the leaves under a stream of warm air (70°C) and by grounding them in a mill.

The stevioside was obtained by extraction of the ground leaves. To remove the lipid fraction, the leaves were first extracted in a Soxhlet with Ethylacetate during 5 hours. Then the powder was extracted a second time with Ethanol (Soxhlet, during 5 hours). The solvent was reduced to a small volume and the stevioside was allowed to crystallize in the refrigerator. The crystals were collected, washed with cold Ethanol, solubilised and again crystallized as described.

### 1) Tart:

Make a mixture of 250 g flour, 50 g butter, 1 egg, 100 ml milk, half a teaspoon of salt and 110 g of composition E. After fermentation bake it during 30 min at 250°C.

### 2) Compote:

Take 1 kg of apples cut in pieces, add a bottom of water and 1 g of composition C. Cook at 100°C.

### 3) Whipped cream:

Take 1 l of cream and mix with 1.5 g of composition C.

### 4) Confiture:

Add 170 g of composition E to 1 kg of meshed fruit. Cook at 100°C.

### 5) Soft drinks:

For 1 l: take 550 ml fruit juice, 450 ml water and add 1.6 g of composition A.

### 6) Apple pie:

Mix 250 g flour, 15 g yeast, 50 g butter, 1 egg, 100 ml milk, half a teaspoon of salt and 1.8 g of composition G. Allow fermentation and then bake at 250°C during 30 min. Compote: add 16 g of composition I to 1 kg meshed apples. Cook in a bottom of water.

### 7) Confiture with strawberries:

Ingredients: 1 kg strawberries cut in tiny pieces, 60 ml water, 170 g of composition F, 20 g PEC Plus. First cook the strawberries in the water and the composition F. Then add the PEC Plus. Cook for 1 or 2 minutes more. Pour the confiture in confiture jars, let the confiture cool, and keep it in the refrigerator.

### 8) Stewed apples:

In a large pot cook 3 kg of finely cut apples on a low fire together with 15 g of composition J in a little water until the apples are well cooked.

The quality of the recipes was tested by a jury composed of 10 adults. Although the taste is not the same as that of ordinary sugar, the special sweet taste of the recipes was approved by the jury. The physical appearance of the recipes was also excellent.

To avoid possible flatulation the daily intake of long chain inulins should not exceed 20g/day. Therefore, composition E (stevioside: inulin 2:98) chosen is the highest proposed dilution of stevioside to avoid side effects of inulin and to avoid additional calories coming from the added inulin itself. This composition E still contains enough inulin to obtain a sufficient mass effect in recipes.

In application where the mass effect is less required, other compositions may be used that still allow the easy handling of the sweetener in the kitchen (eg. compositions A to D). A teaspoon of composition A (± 1.5 g) corresponds to ± 427 g of sucrose, what is sufficient to make eg. 1 liter of fruit juice (recipe 5).

To avoid excessive flatulation and to reduce the caloric value of the mixture, composition C is proposed. This composition provides still a good mass effect in recipes as eg. in recipe 6. If the mass effect is less required lower amounts of inulin may be used as in compositions A and B.

The compositions according to the invention are characterized in the following advantages.

The composition may be cooked and may be baked at 250°C during 30 min.

The caloric value of our combination is very low: the fructans are not metabolized except by bacteria in the colon, giving only short chain acids that are taken up and stevioside is not metabolized and therefore has no caloric value. Moreover, these compounds are used in small amounts.

By the combination of the above natural compounds according to the invention a natural sweetener is produced that has many advantages over the composing elements, i.e. :
- the compositions are low in calories and are suited as dietary components;
- the compositions may be consumed by diabetics;
- the difficult procedures to convert fructans enzymatically or chemically into sweet products (shorter chains) have become superfluous;
- because stevioside itself is very sweet, the mixture with a bulk compound is very interesting for use in the household or for the small industry (eg. bakers);
- the compositions are ideal combinations for preparing sweet confitures, jam and other products which require the necessity of making larger volume with a low caloric value;
- the compositions are heat persistant and may be cooked without problems, and may be used in eg. bakeries and other food preparing industries. Moreover, the products do not produce harmful decomposition products as is the case with other sweeteners, that are sometimes harmful to eg. patients with ketourenia. The compositions are free of such problems.

## Claims

1. Composition comprising at least one glycoside of steviol and at least one fructan, selected from the group comprising the inulins, the levans and the neokestoses.

2. Composition according to claim 1, wherein the fructan concentration is 80-99.9% by weight.

3. Composition according to any of the previous claims, wherein the degree of polymerisation of the fructan is at least equal to 9.

4. Composition according to any of the previous claims, wherein the glycoside of steviol is selected from the group comprising stevioside, steviolmonoside, steviolbioside, rebaudioside A, rebaudioside B, rebaudioside C, rebaudioside D, rebaudioside E, dulcoside A and dulco-side B.

5. Composition according to claim 4, wherein the glycoside of steviol is stevioside.

6. Composition according to any of the previous claims, wherein the glycoside of steviol is derived from Stevia rebaudiana.

7. Composition according to claim 6, comprising parts of a Stevia rebaudiana plant.

8. Composition according to any of the previous claims, wherein the fructan is inuline.

9. Composition according to claim 8, comprising 80-99.9% by weight inuline and 0.1-20% by weight stevioside.

10. Food preparation comprising a composition according to any of the previous claims.
